# EUROPÄISCHE PATENTSCHRIFT

(11) **EP 0 663 318 B1**
(45) Veröffentlichungstag und Bekanntmachung des Hinweises auf die Patenterteilung: **18.03.1998**
(21) Anmeldenummer: 94119718.8
(22) Anmeldetag: 14.12.1994
(51) Int. Cl.: B60N 3/10

(54) **Halter für Trinkbehälter**
Holder for beverage containers
Support pour récipients de boissons

(30) Priorität: 04.01.1994 DE 9400061 U
(43) Veröffentlichungstag der Anmeldung: 19.07.1995
(73) Patentinhaber: ELDRA-KUNSTSTOFFTECHNIK GmbH, D-84144 Geisenhausen (DE)
(72) Erfinder: Gotterbauer, Klaus, D-84186 Langenvels/Vilsheim (DE); Hehn, Wilhelm, D-84168 Ahorn (DE)
(74) Vertreter: Kohlmann, Karl Friedrich, Dipl.-Ing.

(56) Entgegenhaltungen:
- WO-A-91/11945
- DE-A- 2 700 107
- DE-A- 4 224 701
- US-A- 2 215 411
- US-A- 2 584 646
- US-A- 4 852 843
- US-A- 5 087 008

## Beschreibung

Die Erfindung bezieht sich auf einen Halter für flüssigkeitsbefüllte offen in einem Fahrzeug mitzuführende Behältnisse, wie Becher, Dosen und dergl. in Fahrzeugen, bestehend aus einem formstabilen Trägerteil, insbesondere einem mit einem Innenausstattungsteil des Fahrzeuges formeinheitlich bzw. zu einem Innenausstattungsteil formanschlußfähig ausgebideten Trägerteil, das mit einer Vertiefung für ein Behältnis ausgebildet ist, und mindestens einem zur Vertiefung des Trägerteiles gerichteten, federnd elastischen Klemmteil, welches wenigstens eine sich radial zur Öffnung des Trägerteiles erstreckende Haltelippe aufweist.

Halter für flüssigkeitsbefüllte und insbesondere wenigstens vorübergehend offen in einem Fahrzeug mitzuführende Behältnisse, wie Becher, Dosen und dergl. sind in einer Vielzahl von Ausführungsformen bekannt.
Eine erste und einfachste Bauart solcher Halter für flüssigkeitsbefüllte und insbesondere wenigstens vorübergehend offen in einem Fahrzeug mitzuführende Behältnisse, besteht aus einem einfachen topfförmigen Aufnahmeteil für Behältnisse und ist im Wesentlichen mit dem Nachteil behaftet, daß in das Aufnahmeteil nur Behältnisse eines durch dessen Öffnungsweite unveränderlich vorgegebenen Durchmessers einsetzbar sind, da kleinere Behältnisse nicht mehr standsicher oder zumindest nicht mehr klapperfrei gehalten werden können.
Eine andere Bauart solcher Halter besteht aus einem Trägerteil mit einer darin angeordneten Halteeinrichtung, insbesondere eine Art Spannband zur sicheren standfesten und klapperfreien Festlegung von Behältnissen, wenigstens innerhalb mehr oder minder geringfügiger Durchmesserunterschiede. Diese Bauart von Haltern weist neben dem Nachteil, daß sie auch nur für Behältnisse einigermaßen gleichen Durchmessers geeignet ist vor allem den Nachteil auf, daß sie mit einem erheblichen Herstellungsaufwand behaftet ist. (US-PS 4 530 480). Bei einer weiteren bekannten Bauart von Haltern für flüssigkeitsbefüllte und insbesondere wenigstens vorübergehend offen in einem Fahrzeug mitzuführende Behältnisse ist in ein Trägerteil ein aus einem Schaumstoffmaterial hergestelltes und mit radial zu einer Aufnahmeöffnung für ein einzusetzendes Behältnis gerichteten Haltelippen versehenes Klemmteil eingesetzt. Diese Bauart von Haltern für Behältnisse ist auf Grund der weitgehenden elastischen Verformbarkeit des Schaumstoffmaterials an sich und vor allem auf Grund der Ausbildung radial zur Aufnahmeöffnung gerichteter Haltelippen zwar hinreichend geeignet, Behältnisse unterschiedlicher Durchmesser aufzunehmen und auch standsicher und klapperfrei zu haltern, jedoch bringt die Verwendung von Schaumstoffmaterial als Klemmteil den Nachteil eines umständlichen Zusammenbaus und ferner der Gefahr einer vorzeitigen Materialabnutzung-und Ermüdung mit sich. (DE-Gbm 84 23 158.029)

Schließlich ist noch ein Halter für flüssigkeitsbefüllte und insbesondere wenigstens vorübergehend offen in einem Fahrzeug mitzuführende Behältnisse in Fahrzeugen bekannt, dessen Trägerteil aus zwei einander zu einem topfförmigen Aufnahmeteil ergänzenden Formteilen besteht und bei dem ein radial nach innen gerichtete Haltezungen aufweisendes Klemmteil als besonderes plattenförmiges Bauteil ausgebildet ist, welches im Halter im Zusammenhang mit der gegenseitigen Festlegung der beiden Teile des topfförmigen Aufnahmeteiles festgelegt wird. Eine derartige Ausbildung des Halters gestattet zwar gleichfalls eine standsichere und hinreichend klapperfreie Halterung von Behältnissen unterschiedlicher Durchmesser in Fahrzeugen, ist jedoch infolge der Vielzahl seiner Bestandteile gleichfalls auch mit einem sehr hohen Herstellungs-und Montageaufwand behaftet. (US-PS 4 818 017)

Aus der US-A-2,215,411 ist eine Flaschenhalterung bekannt, die mehrere aus Metall bestehende flexible Zungen aufweist, die zueinander kreisförmig angeordnet sind. Die Zungen selbst sind leicht bogenförmig ausgebildet, um an ihren am weitesten innen gelegenen Punkten mit dem Flaschenbehältnis, das hierin zu plazieren ist, anzulegen.

Ein Halter gemäß dem Oberbegriff des Anspruchs 1 ist aus der US-A-4,852,843 bekannt. Bei dem hieraus bekannten Halter erstrecken sich an einem oberen Rand eines nach oben hin offenen zylinderförmigen Halterteils in die Öffnung hinein flexible Haltelippen. Die Haltelippen legen sich an die Wandung einer in das Halteteil eingesteckten Dose an. Hinsichtlich des Materials für die Haltelippen ist lediglich offenbart, daß diese ausreichend flexibel sein müssen, damit es ihnen möglich ist, sich leicht umzubiegen, um sich somit an unterschiedliche Durchmesser aufweisende Behältnisse anzupassen.

Der Erfindung liegt das technische Problem zugrunde, einen Halter der eingangs bezeichneten Art für flüssigkeitsbefüllte und insbesondere wenigstens vorübergehend offen in einem Fahrzeug mitzuführende Behältnisse, wie Becher, Dosen und dergl. so auszubilden, daß er auf der einen Seite mit einem geringstmöglichen Aufwand herstellbar ist und auf der anderen Seite zur sicheren und klapperfreien Halterung von Behältnissen, wie Bechern, Dosen und dergl. unterschiedlichster Durchmesser auch in einem fahrenden Fahrzeug geeignet ist, und wobei zudem eine lange, insbesondere der Lebensdauer des Fahrzeuges entsprechende Betriebszeit gewährleistet sein muß. Ferner soll der zu schaffende Halter in ein ohnehin vorhandenes Innenausstattungsteil des Fahrzeuges integriert oder integrierbar sein.

Dieses technische Problem wird erfindungsgemäß bei einem gattungsgemäßen Halter dadurch gelöst, daß das Klemmteil zumindest im Bereich seiner Haltelippe als Zwei-Komponenten-Spritzgußteil ausgebildet ist, in der Weise, daß der überwiegende Teil seiner Materialdicke aus einem federnd elastisch verformbaren Material mit rauher Oberfläche und einem dünnwandigen, im wesentlichen oberflächenbildenden Teil aus einem glatte Gleitflächen bildenden Material besteht.

Die Ausbildung des Klemmteiles als Zwei-Komponenten-Spritzgußteil zeichnet sich zunächst durch den Vorteil einer einfachen Herstellbarkeit aus und gestattet darüberhinaus wenigstens die Haltelippe des Klemmteiles mit einer solchen Federelastizität auszustatten, die auf der einen Seite ein sicheres klapperfreies Festhalten von Behältnissen unterschiedlichster Durchmesser und auf der anderen Seite eine bleibende Spann- bzw. Haltekraft der Haltelippen gewährleistet, wobei zudem die oberflächenbildende, dünnwandig ausgebildete Komponente zum einen eine glatte, das Einsetzen eines Behältnisses begünstigende Oberfläche und zum anderen eine weitgehende Abnutzungsfreiheit der Oberfläche gewährleistet. Darüberhinaus kann, ohne die vorgenannten Vorteile aufgeben zu müssen, durch entsprechende Materialwahl oder Bemessung von Wandungs-bzw. Schichtdicken nahezu jede beliebige Haltecharakteristik des Halters eingestellt werden.

Eine günstige Verwirklichungsform besteht dabei darin, daß der aus einem federnd elastisch verformbaren Kunststoffmaterial bestehende Anteil der Wandungsdicke mehr als drei-viertel der gesamten Wandungsdicke der Haltelippe ausmacht, wobei sich eine zweckmäßige Materialpaarung beispielsweise daraus ergibt, daß der federnd elastische Wandungsdickenteil beispielsweise aus TPE und der eine glatte Gleitfläche bildende Wandungsdickenteil beispielsweise aus PP besteht.

Im Interesse einer leichten Herstellbarkeit und vor allem der Möglichkeit, den Halter in ein ohnehin vorhandenes, insbesondere als Formteil aus einem Kunststoffmaterial ausgebildetes Innenausstattungsteil des Fahrzeuges integrieren zu können, ist vorteilhafterweise vorgesehen, daß das Klemmteil, gegebenenfalls auch ein ausschließlich durch eine Haltelippe gebildetes Klemmteil, mit dem Trägerteil über wechselseitig angeordnete Vorsprünge und Ausnehmungen formschlüssig verrastbar ist. Diese Ausbildung der Befestigung des Klemmteiles am Trägerteil gestattet es vor allem, das Trägerteil als topf-oder trogartige Vertiefung in einem, z.B. als schalenartiges Kunststoffteil ausgebildeten Innenausstattungsteil formeinheitlich auszubilden und das Klemmteil ohne großen Montageaufwand und insbesondere ohne die Anwendung einer Fügeverbindung, wie Klebung oder Schweißung, sowie ohne Zuhilfenahme eines Werkzeuges dauerhaft und hinreichend starr im Trägerteil festzulegen.

Eine besonders vorteilhafte Ausgestaltung wird in diesem Zusammenhang darin gesehen, daß das Klemmteil einen wenigstens abschnittsweise formgleich zur Umfangswandung des Trägerteiles ausgebildeten Schaftteil aufweist, wobei zum einen das Einsetzen des Klemmteiles in das Trägerteil und zum anderen die Haltbarkeit der formschlüssigen Verrastung dadurch optimiert werden, daß das Klemmteil im Bereich des freien Endes seines Schaftteiles mit radial nach außen vorspringenden Rastnasen und das Trägerteil mit komplementär ausgebildeten und angeordneten Rastausnehmungen versehen ist. Insbesondere erscheint es hierbei vorteilhaft, daß das Schaftteil des Klemmteiles im Bereich seines freien, die eine oder mehrere Rastnasen tragenden Endes vermittels axial gerichteter insbesondere schlitzförmiger Längsausnehmungen federzungenartig ausgebildet ist. In diesem Zusammenhang ist zweckmäßigerweise ferner vorgesehen, daß das Schaftteil und der aus einem eine glatte Gleitfläche bildenden Kunststoffmaterial bestehende Wandungsdickenteil der Haltelippe form-und materialeinheitlich einteilig ausgebildet sind. Hierbei kann weiter vorgesehen sein, daß der aus einem eine glatte Gleitfläche bildenden Kunststoffmaterial bestehende Materialdickenanteil am freien Rand der Haltelippe mit einem Wulst versehen ist, welcher den Stirnrand des aus einem federnd elastischen Kunststoffmaterial bestehenden Materialdickenanteiles der Haltelippe übergreift.

Das Trägerteil ist durch eine topf-oder trogförmige Vertiefung im Innenausstattungsteil gebildet, welche vorteilhafterweise eine kreisrunde Querschnittsform aufweist, jedoch auch jede beliebige andere Querschnittsform aufweisen könnte.

In weiterer zweckmäßiger Einzelausgestaltung ist dann weiter vorgesehen, daß das Schaftteil des Klemmteiles sich lediglich über einen Teilbereich des Innenunfanges des Trägerteiles hin erstreckt. Hand in Hand mit einer solchen Ausbildung des Schaftteiles des Klemmteiles ist weiterhin auch vorgesehen, daß sich auch die Haltelippe lediglich über einen Teilbereich der Öffnungsweite des Trägerteiles hin erstreckt und zwar zweckmäßigerweise derart, die Haltelippe des Klemmteiles in der Draufsicht eine etwa nierenförmige Gestalt besitzt, dahingehend, daß mindestens in deren mittleren Bereich der freie Stirnrand der Haltelippe einen kreisbogenartig nach außen gerichteten Konturverlauf aufweist.

Zwar kann für einen, vor allem hinsichtlich der Durchmesser der in den Halter einsetzbaren Behältnisse begrenzten, Anwendungsbereich die Anordnung lediglich eines Klemmteiles innerhalb des Trägerteiles vorgesehen und auch ausreichend sein, bevorzugterweise sind aber innerhalb des Trägerteiles zwei Klemmteile einander gegenüberliegend angeordnet.

Die Anwendung eines neuerungsgemäß gestalteten Klemmteiles ist keineswegs nur auf die Verwendung in Verbindung mit mit einem Innenausstattungsteil formeinheitlich ausgebildeten Trägerteil beschränkt, sondern vielmehr von der Ausbildung und Anordnung des Trägerteiles unabhängig.

Die Erfindung ist nachfolgend anhand eines in der Zeichnung dargestellten Ausführungsbeispieles im Einzelnen beschrieben. In der Zeichnung zeigt die
- Figur 1: eine schaubildliche Darstellung eines erfindungsgemäßen Halters für Behältnisse;
- Figur 2: eine Draufsicht auf die Einbaulage von Haltern in einem Fahrzeug;
- Figur 3: einen Längsschnitt durch ein mit einem Halter für Behältnisse ausgestattetes Innenausstattungsteil;
- Figur 4: einen Teilschnitt durch das Klemmteil des Halters;
- Figur 5: eine Draufsicht auf das Klemmteil des Halters gemäß Figur 4;
- Figur 6: eine Stirnansicht des des Klemmteiles des Halters nach Figur 4 und 5;

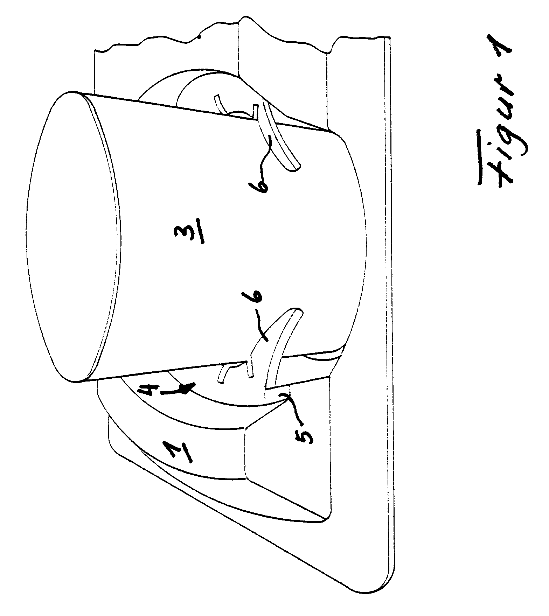

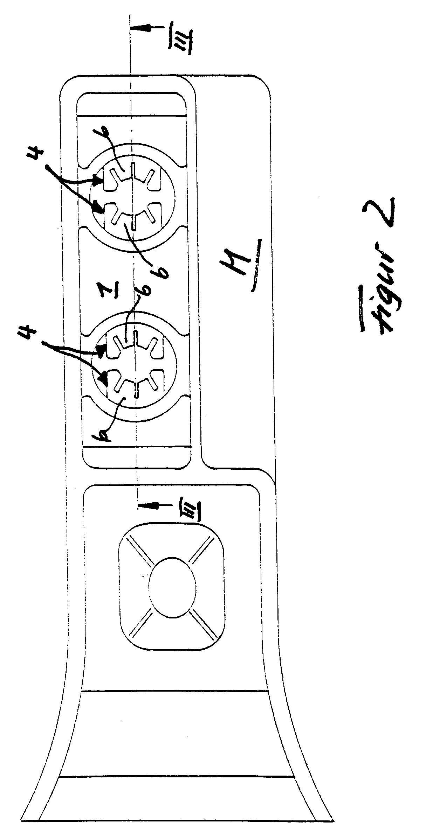

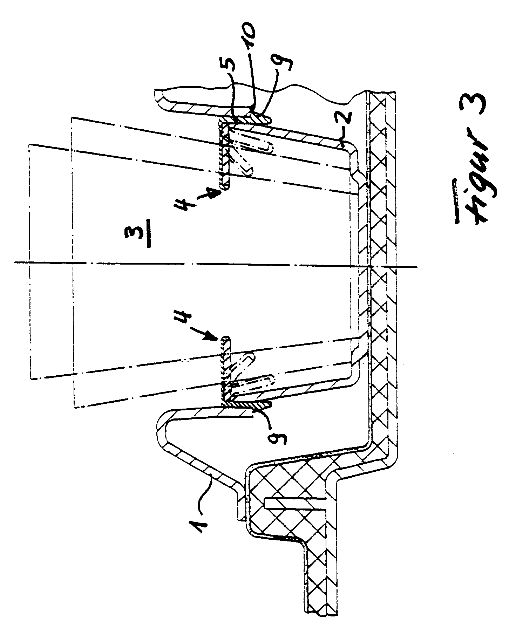

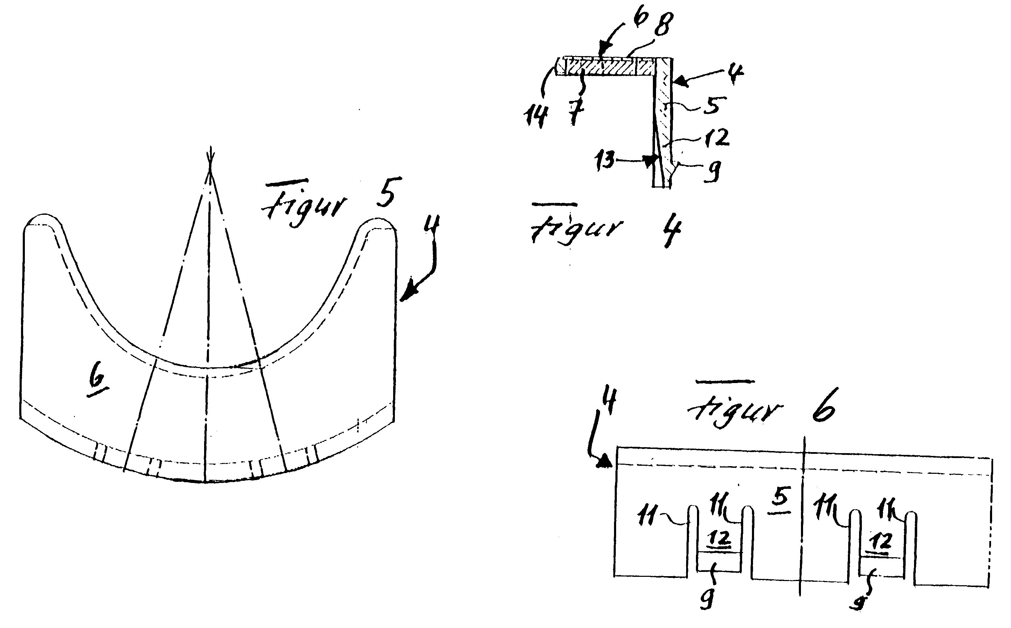

Ein in der Figur 2 nur teilweise dargestelltes Innenausstattungsteil 1 eines Kraftfahrzeuges, wie Mittelkonsole M oder Armlehne oder dergl., besteht aus einem starren, schalenartig ausgebildeten Formteil aus einem Kunststoffmaterial und ist mit einer das Trägerteil bildenden topf-oder trogförmigen Vertiefung 2 versehen, welche zur Aufnahme des im Fahrzeug mitzuführenden Behältnisses 3, im gezeigten Ausführungsbeispiel eines Bechers, bestimmt ist. Im Ausführungsbeispiel besitzt die topf- oder trogförmige Vertiefung 2 eine kreisrunde Querschnittsform, könnte jedoch auch jede beliebige andere Querschnittsform aufweisen. In die das Trägerteil bildende Vertiefung 2 sind im gezeigten Ausführungsbeispiel zwei Klemmteile 4 einander gegenüberliegend eingesetzt. Jedes der beiden Klemmteile 4 erstreckt sich lediglich über einen Teil des Umfanges der Vertiefung 2 hin und besteht aus einem Schaftteil 5 und einer Haltelippe 6. Das Klemmteil 4 ist als Zwei-Komponenten-Spritzgußteil ausgeführt, wobei die Haltelippe 6, über ihre gesamte Materialdicke hin gesehen, aus einem ersten Materialdickenteil 7 aus einem bleibend federnd elastischen, eine rauhe Oberfläche bildenden Kunststoffmaterial, beispielsweise TPE, und einem zweiten dünnwandigen Materialdickenteil 8 aus einem eine glatte Gleitfläche bildenden Kunststoffmaterial, beispielsweise PP, besteht. Der dünnwandige Materialdickkenanteil 8 der Haltelippe 6 ist mit dem Schaftteil 5 des Klemmteiles 4 form-und materialeinheitlich ausgebildet.
Der Schaftteil 5 des Klemmteiles 4 weist einen zum Innenumfang der Vertiefung 2 deckungsgleichen Konturverlauf auf und ist an seinem freien Ende mit zwei Rastnasen 9 versehen, welchen entsprechende komplementär ausgebildete Rastausnehmungen 10 in der Umfangswandung der Vertiefung 2 zugeordnet sind. Wie insbesondere aus der Figur 4 ersichtlich, ist der Schaftteil 5 des Klemmteiles 4 beiderseits jeder Rastnase 9 mit axial gerichteten Schlitzausnehmungen 11 versehen, derart, daß die Rastnasen 9 an Federzungen 12 angeordnet sind, wobei der Schaftteil 5 des Klemmteiles 4, wie insbesondere aus der Figur 4 ersichtlich, wenigstens im Bereich der Federzungen 12 zusätzlich noch mit einer innenseitigen Abschrägung 13 versehen ist. In der Draufsicht weist die Haltelippe 6 des Klemmteiles 4 eine im Wesentlichen nierenförmige Grundrißform auf, derart, daß sowohl ihr äußerer als auch ihr innerer Konturverlauf im wesentlichen Kreisbogenabschnitte bilden. Wie insbesondere aus der Figur 4 weiterhin ersichtlich besitzt der durch das eine glatte Gleitfläche bildende Kunststoffmaterial gebildete Wandungsdickenanteil 8 der Haltelippe 6 eine Materialstärke von lediglich einem Sechstel der gesamten Wandungsdicke der Haltelippe 6 und ist am freien Rand der Haltelippe 6 mit einem Wulst 14 versehen, welcher den Stirnrand des aus einem federnd elastischen Kunststoffmaterial bestehenden Materialdickenanteiles 7 der Haltelippe 6 übergreift.

## Patentansprüche

1. Halter für flüssigkeitsbefüllte, offen in einem Fahrzeug mitzuführende Behältnisse (3) wie Becher, Dosen und dergleichen, bestehend aus
- einem formstabilen Trägerteil (2), das mit einer Vertiefung für ein Behältnis ausgebildet ist,
- mindestens einem zur Vertiefung des Trägerteils (2) gerichteten, federnd elastischen Klemmteil (4), das wenigstens eine sich radial zur Öffnung des Trägerteils (2) erstreckende Haltelippe (6) aufweist,
**dadurch gekennzeichnet, daß**
das Klemmteil (4) zumindest im Bereich seiner Haltelippe (6) als Zwei-Komponenten-Spritzgußteil ausgebildet ist, in der Weise, daß der überwiegende Teil seiner Materialdicke aus einem federnd elastisch verformbaren Material mit rauher Oberfläche und einem dünnwandigen, im wesentlichen oberflächenbildenden Teil, aus einem eine glatte Gleitfläche bildenden Material besteht.

2. Halter nach Anspruch 1,
**dadurch gekennzeichnet, daß**
der aus einem federnd elastisch verformbaren Kunststoffmaterial bestehende Anteil der Wandungsdicke mehr als drei Viertel der gesamten Wandungsdicke der Haltelippe (6) ausmacht.

3. Halter nach Anspruch 1 und 2,
**dadurch gekennzeichnet, daß**
der federnd elastische Wandungsdickenteil der Haltelippe (6) aus TPE und der eine glatte Gleitfläche bildende Wandungsdickenteil der Haltelippe (6) aus PP besteht.

4. Halter nach Anspruch 1 bis 3,
**dadurch gekennzeichnet, daß**
das Klemmteil (4) einen wenigstens abschnittsweise formgleich zur Umfangswandung des Trägerteiles (2) ausgebildeten Schaftteil (5) aufweist.

5. Halter nach Anspruch 1 bis 4,
**dadurch gekennzeichnet, daß**
das Schaftteil (5) und der aus einem eine glatte Gleitfläche bildenden Kunststoffmaterial bestehende Wandungsdickenteil der Haltelippe (6) form- und materialeinheitlich einteilig ausgebildet sind.

6. Halter nach Anspruch 1 bis 5,
**dadurch gekennzeichnet, daß**
die Haltelippe (6) an sich oder ein gesamtes Klemmteil (4) mit dem Trägerteil (2) über wechselseitig angeordnete Vorsprünge und Ausnehmungen formschlüssig verrastbar ist.

7. Halter nach Anspruch 1 bis 6,
**dadurch gekennzeichnet, daß**
das Klemmteil (4) im Bereich des freien Endes seines Schaftteiles (5) mit radial nach außen vorspringenden Rastnasen (9) und das Trägerteil (2) mit komplementär ausgebildeten und angeordneten Rastausnehmungen (11) versehen ist.

8. Halter nach Anspruch 1 bis 7,
**dadurch gekennzeichnet, daß**
das Schaftteil (5) des Klemmteils (4) sich lediglich über einen Teilbereich des Innenumfanges des Trägerteils (2) hin erstreckt.

9. Halter nach Anspruch 1 bis 8,
**dadurch gekennzeichnet, daß**
das Schaftteil (5) des Klemmteiles (4) im Bereich seines freien, eine oder mehrere Rastnasen (9) tragenden Endes vermittels axial gerichteter, insbesondere schlitzförmiger Längsausnehmungen (11) federzungenartig ausgebildet ist.

10. Halter nach Anspruch 1 bis 9,
**dadurch gekennzeichnet, daß**
das Trägerteil (12) topf- oder trogförmig ausgebildet ist.

11. Halter nach Anspruch 1 bis 10,
**dadurch gekennzeichnet, daß**
innerhalb eines Trägerteils (2) zwei Klemmteile (4) einander gegenüberliegend angeordnet sind.

12. Halter nach Anspruch 1 bis 11,
**dadurch gekennzeichnet, daß**
die Haltelippe (6) des Klemmteiles (4) in der Draufsicht eine etwa nierenfömige Gestalt besitzt, dahingehend, daß mindestens in deren mittleren Bereich der freie Stirnrand der Haltelippe (6) einen kreisbogenartig nach außen gerichteten Konturverlauf aufweist.

13. Halter nach Anspruch 1 bis 12,
**dadurch gekennzeichnet, daß**
der aus einem eine glatte Gleitfläche bildenden Kunststoffmaterial bestehende Materialdickenanteil am freien Rand der Haltelippe (6) mit einem Wulst (14) versehen ist, welcher den Stirnrand des aus einem federnd elastischen Kunststoffmaterial bestehenden Materialdickenanteiles der Haltelippe (6) übergreift.

14. Halter nach Anspruch 1 bis 13,
**dadurch gekennzeichnet, daß**
das Trägerteil (2) mit einem Innenausstattungsteil des Fahrzeugs formeinheitlich bzw. zu einem Innenausstattungsteil formanschlußfähig ausgebildet ist.

## Claims

1. Holder for liquid-filled receptacles (3), such as cups, cans and the like to be carried along open in a vehicle, consisting of
- a dimensionally stable support part (2) which is constructed with an indentation for a receptacle,
- at least one springy elastic wedge part (4) which is directed towards the indentation of the support part (2) and has at least one retaining lip (6) extending radially with respect to the opening in the support part (2),
characterised in that
the wedge part (4) is constructed at least in the region of its retaining lip (6) as a two-component injection moulded part in such a way that the predominant part of its material thickness consists of a springy elastically deformable material having a rough surface and a thin-walled, essentially surface-forming part made of a material forming a smooth sliding surface.

2. Holder according to Claim 1,
characterised in that
the portion of the wall thickness consisting of a springy elastically deformable plastic material represents more than three quarters of the total wall thickness of the retaining lip (6).

3. Holder according to Claim 1 and 2,
characterised in that
the springy elastic part of the wall thickness of the retaining lip (6) is composed of TPE and the part of the wall thickness of the retaining lip (6) forming a smooth sliding surface is composed of PP.

4. Holder according to Claim 1 to 3,
characterised in that
the wedge part (4) has a shank part (5) constructed at least in sections isomorphically with respect to the circumferential wall of the support part (2).

5. Holder according to Claim 1 to 4,
characterised in that
the shank part (5) and the part of the wall thickness of the retaining lip (6) consisting of a plastic material forming a smooth sliding surface are constructed in one part integral in shape and material.

6. Holder according to Claim 1 to 5,
characterised in that
the retaining lip (6) as such or an entire wedge part (4) can be engaged in form-locking manner to the support part (2) through projections and recesses reciprocally arranged on both sides.

7. Holder according to Claim 1 to 6,
characterised in that
the wedge part (4) is provided in the region of the free end of its shank part (5) with radially outwardly projecting detents (9) and the support part (2) is provided with catch recesses (11) constructed and arranged in complementary manner.

8. Holder according to Claim 1 to 7,
characterised in that
the shank part (5) of the wedge part (4) extends only over a partial region of the internal perimeter of the support part (2).

9. Holder according to Claim 1 to 8,
characterised in that
the shank part (5) of the wedge part (4) is constructed in the region of its free end bearing one or more detents (9) in the manner of flexible tongues by means of axially directed, especially slot-shaped, longitudinal recesses (11).

10. Holder according to Claim 1 to 9,
characterised in that
the support part (12) is of cup-shaped or trough-shaped construction.

11. Holder according to Claim 1 to 10,
characterised in that
two wedge parts (4) are arranged opposite one another inside a support part (2).

12. Holder according to Claim 1 to 11,
characterised in that
in plan view the retaining lip (6) of the wedge part (4) has an approximately kidney-shaped form to the effect that at least in its central region the free front end of the retaining lip (6) has an outwardly directed contour shaped like an arc of a circle.

13. Holder according to Claim 1 to 12,
characterised in that
the portion of the material thickness consisting of a plastic material forming a smooth sliding surface is provided at the free edge of the retaining lip (6) with a bead (14) which engages over the front face of the portion of the material thickness of the retaining lip (6) consisting of a springy elastic plastic material.

14. Holder according to Claim 1 to 13,
characterised in that
the support part (2) is constructed integral in shape with an interior fitting part of the vehicle or capable of form-fitting attachment to an interior fitting part.

## Revendications

1. Support pour récipients (3) ouverts, remplis de liquide, à emporter dans des véhicules, tels que des tasses, boîtes et similaires, constitué de:
- une partie porteuse indéformable (2) configurée avec un creux pour un récipient,
- au moins une pièce élastique de serrage (4) à ressort, dirigée vers le creux de la partie porteuse (2), et qui présente au moins une lèvre de retenue (6) qui s'étend radialement en direction de l'ouverture de la partie porteuse (2),
caractérisé en ce que
au moins dans la région de sa lèvre de retenue (6), la pièce de serrage (4) est configurée comme pièce à deux composants moulée par injection, de telle sorte que la plus grande partie de l'épaisseur de son matériau soit constituée d'un matériau élastiquement déformable à surface rugueuse, et d'une partie en paroi mince, formant essentiellement la partie superficielle, en un matériau formant une surface lisse de glissement.

2. Support selon la revendication 1, caractérisé en ce que la partie de l'épaisseur de la paroi qui est constituée d'une matière plastique élastiquement déformable représente plus des trois quarts de l'épaisseur totale de la lèvre de retenue (6).

3. Support selon les revendications 1 et 2, caractérisé en ce que la partie élastique à ressort de l'épaisseur de la paroi de la lèvre de retenue (6) est constituée de TPE, et la partie de la paroi qui forme une surface lisse de glissement est constituée de PP.

4. Support selon les revendications 1 à 3, caractérisé en ce que la pièce de serrage (4) présente une partie emboîtée (5) qui, sur au moins certaines parties, présente la même forme que la paroi périphérique de la partie porteuse (2).

5. Support selon les revendications 1 à 4, caractérisé en ce que la partie emboîtée (5) et la partie de l'épaisseur de la paroi de la lèvre de retenue (6) qui est constituée d'une matière plastique formant une surface lisse de glissement sont configurées d'un seul tenant, tant en ce qui concerne leur forme qu'en ce qui concerne leur matériau.

6. Support selon les revendications 1 à 5, caractérisé en ce que la lèvre de retenue (6) proprement dite ou une pièce de serrage (4) complète peuvent être accrochées élastiquement en correspondance géométrique sur la partie porteuse (2), par des saillies et des creux disposés en alternance.

7. Support selon les revendications 1 à 6, caractérisé en ce que dans la région de l'extrémité libre de sa partie emboîtée (5), la pièce de serrage (4) est dotée de becs d'accrochage élastique (9) débordant radialement vers l'extérieur, et la partie porteuse (2) est dotée de creux d'accrochage élastique (11) configurés et agencés de manière complémentaire.

8. Support selon les revendications 1 à 7, caractérisé en ce que la partie emboîtée (5) de la pièce de serrage (4) s'étend uniquement sur une partie de la périphérie intérieure de la partie porteuse (2).

9. Support selon les revendications 1 à 8, caractérisé en ce que dans la région de son extrémité libre qui porte un ou plusieurs becs d'accrochage élastique (9), la partie emboîtée (5) de la pièce de serrage (4) est configurée en forme de languette élastique, au moyen de creux longitudinaux (11) orientés axialement, et en particulier en forme de fentes.

10. Support selon les revendications 1 à 9, caractérisé en ce que la partie porteuse (2) est configurée en forme de pot ou d'auge.

11. Support selon les revendications 1 à 10, caractérisé en ce que deux pièces de serrage (4) sont disposées l'une en face de l'autre à l'intérieur d'une partie porteuse (2).

12. Support selon les revendications 1 à 11, caractérisé en ce que la lèvre de retenue (6) de la pièce de serrage (4) présente vue en plan une forme sensiblement ovale, en ce sens qu'au moins dans sa partie centrale, le bord frontal libre de la lèvre de retenue (6) présente un contour en arc de cercle dirigé vers l'extérieur.

13. Support selon les revendications 1 à 12, caractérisé en ce que la partie de l'épaisseur du matériau qui est constituée d'une matière plastique formant une surface lisse de glissement est dotée sur le bord libre de la lèvre de retenue (6) d'un bourrelet (14) qui recouvre la partie de l'épaisseur du matériau de la lèvre de retenue (6) qui est constituée d'une matière plastique élastiquement déformable.

14. Support selon les revendications 1 à 13, caractérisé en ce que la partie porteuse (2) est réalisée en une seule pièce avec une partie de l'équipement intérieur du véhicule, ou de manière à pouvoir se rattacher en correspondance de forme à une partie de l'équipement intérieur.
